# EUROPÄISCHE PATENTANMELDUNG

(11) **EP 1 736 870 A1**
(43) Veröffentlichungstag der Anmeldung: **27.12.2006**
(21) Anmeldenummer: 05012893.3
(22) Anmeldetag: 15.06.2005
(51) Int. Cl.: G06F 9/445, G06F 11/34

(54) **Aktualisierungs-Management-System und Verfahren zum Bereitstellen von Aktualisierungs-Dateien unter Berücksichtigung von Nutzungsintensitätsdaten**

(71) Anmelder: SIEMENS AKTIENGESELLSCHAFT, 80333 München (DE)
(72) Erfinder: Ullemeyer, Manfred, 76829 Landau (DE)

(57) **Zusammenfassung**

Aktualisierungs-Management-System und Verfahren zum Bereitstellen von Aktualisierungs-Dateien und/oder Aktualisierungs-Informationen für Soft- und/oder Hardwarewarekomponenten einer Hard- und Softwareumgebung.

Es wird ein Aktualisierungs-Management-System zum Managen der Aktualisierung von Soft- und/oder Hardwarewarekomponenten (102-108) einer Hard- und Softwareumgebung (100) zur Verfügung gestellt mit:
- wenigstens einem Konfigurationsdatenprotokollmodul (112) zum Protokollieren von Konfigurationsdaten der Soft- und/oder Hardwarewarekomponenten (102-108),
- einem zum Bereitstellen von Aktualisierungs-Dateien und/oder Aktualisierungs-Informationen ausgestalteten Aktualisierungs-Server (130) mit einem Konfigurationsanalysemodul (136) zum Analysieren der protokollierten Konfigurationsdaten im Hinblick auf Aktualisierungsbedarf der jeweiligen Soft- und/oder Hardwarewarekomponenten (102-108) unter Berücksichtigung der verfügbaren Aktualisierungen, und
- einer Kommunikationsseinrichtung (116,134) zum Übertragen der Konfigurationsdaten vom Konfigurationsdatenprotokollmodul (112) an den Aktualisierungs-Server (130).

## Beschreibung

Die vorliegende Erfindung betrifft ein Aktualisierungs-Management-System zum Managen der Aktualisierung für Soft-und/oder Hardwarekomponenten einer Hard- und Softwareumgebung. Daneben betrifft die Erfindung ein Verfahren zum Bereitstellen von Aktualisierungs-Dateien und/oder Aktualisierungs-Informationen für die Soft- und/oder Hardwarekomponenten.

Aktualisierungs-Management-Systeme, auch Update-Management-Systeme genannt, kommen in unterschiedlichsten Soft- und Hardwareumgebungen zur Anwendung. Beispielhaft seien hier Telekommunikationsanlagen und Automatisierungssysteme genannt. Derartige Anlagen bzw. Systeme umfassen in der Regel eine Vielzahl von Hardwarekomponenten, auf denen die unterschiedlichsten Softwarekomponenten zur Anwendung kommen. Neben klassischer Software, die zumeist auf Computersystemen zur Anwendung kommt, sollen unter dem Begriff Software auch die sogenannte Firmware, also die zur ordnungsgemäßen Funktion der Hardwarekomponenten und speziell für diese geschaffene Software, zusammengefasst werden.

Insbesondere im Umfeld der Automatisierungstechnik eingesetzte Soft- und Hardware unterliegt immer schnelleren Aktualisierungszyklen. Die Aktualisierung kann dabei sowohl die Software- als auch die Hardwarekomponenten betreffen.

Aufgrund unterschiedlicher Anforderungen der einzelnen Anwender sind die Software- und Hardwareumgebungen in der Regel hoch spezialisiert und weisen sowohl hoch individuelle Hardwarekonfigurationen als auch hoch individuelle Softwarekonfigurationen auf. Das Aktualisieren eines solchen Systems erfordert daher ein Feststellen der aktuellen Konfiguration, um gezielt geeignete Patches, also Korrekturprogramme, neuere Programmversionen oder gegebenenfalls neuere Hardwarekomponenten zur Verfügung stellen zu können.

Da eine Aktualisierung einer Software- und Hardwareumgebung immer einen Eingriff in diese Umgebung bedeutet, kann diese beim ungünstigen Zusammentreffen von Umständen dazu führen, dass die Soft- und Hardwareumgebung nach der Aktualisierung erst nach Beseitigung durch die Aktualisierung entstandener Unstimmigkeiten wieder zufriedenstellend läuft. Während der zum Beseitigen der Unstimmigkeiten benötigte Zeit steht das System in der Regel nur eingeschränkt oder überhaupt nicht zur Verfügung. Andererseits ist die Aktualisierung jedoch notwendig, um die Leistungsfähigkeit des Systems an die Bedürfnisse anzupassen und insbesondere zu steigern. Zudem können mittels Aktualisierungen auch bestehende Unstimmigkeiten in der Soft- und Hardwareumgebung korrigiert werden.

Von Anwenderseite besteht daher ein Bedarf nach Aktualisierung der Soft- und Hardwareumgebung. Jedoch besteht in der Regel der Wunsch, bei der Aktualisierung in ein laufendes System so wenig wie möglich und nur soviel wie nötig einzugreifen.

Um eine gezielte Aktualisierung vornehmen zu können, ist in WO 2005/033934 A2 ein System zum Durchführen eines Softwareupdates beschrieben, in dem Informationsdaten von Hardware-und/oder Softwarekomponenten eines Automatisierungssystems gesammelt und in standardisierter Form zusammengestellt werden. Ein Update-Server wertet die zusammengestellten Informationsdaten aus und stellt ein passendes Update mit Update-Informationen in Form eines Reports zusammen. Anhand der gesammelten Informationsdaten wird dann ein genau auf das Automatisierungssystem abgestimmtes Update-Paket ermittelt.

Aufgabe der vorliegenden Erfindung ist es, ein Aktualisierungs-Management-System und ein Verfahren zum Bereitstellen von Aktualisierungs-Dateien und/oder Aktualisierungs-Informationen für Soft- und/oder Hardwarekomponenten einer Hard- und Softwareumgebung zur Verfügung zu stellen, die noch besser an die zu aktualisierende Soft- und Hardwareumgebung angepasst sind.

Diese Aufgabe wird durch ein Aktualisierungs-Management-System nach Anspruch 1 bzw. ein Verfahren nach Anspruch 6 gelöst. Die abhängigen Ansprüche enthalten vorteilhafte Ausgestaltungen der Erfindung.

Ein erfindungsgemäßes Aktualisierungs-Management-System zum Managen der Aktualisierung von Soft- und/oder Hardwarekomponenten einer Hard- und Softwareumgebung, beispielsweise eines Telekommunikationssystems oder eines Automatisierungssystems, umfasst die folgenden Komponenten:
- Protokollieren von Konfigurationsdaten der Soft- und/oder Hardwarekomponenten. Die protokollierten Konfigurationsdaten können vom Konfigurationsdatenprotokollmodul entweder Online zur Verarbeitung weitergeleitet werden oder in einer Konfigurationsprotokolldatei abgelegt werden;
- wenigstens einen Aktualisierungs-Server, der zum Bereitstellen von Aktualisierungs-Dateien und/oder Aktualisierungs-Informationen ausgestaltet ist. Der Aktualisierungs-Server umfasst ein Konfigurationsmodul zum Analysieren der protokollierten Konfigurationsdaten im Hinblick auf Aktualisierungsbedarf der jeweiligen Soft- und/oder Hardwarekomponenten unter Berücksichtigung der verfügbaren Aktualisierungen;
- eine Kommunikationseinrichtung zum Übertragen der Konfigurationsdaten vom Konfigurationsdatenprotokollmodul an den Aktualisierungs-Server. Die Kommunikationseinrichtung kann dabei zum unmittelbaren oder zum mittelbaren Übertragen der Konfigurationsdaten an den Aktualisierungs-Server ausgestattet sein. Das unmittelbare Übertragen kann beispielsweise durch eine direkte Netzwerkverbindung zwischen dem Konfigurationsdatenprotokollmodul und dem Aktualisierungs-Server, über die die Konfigurationsdaten Online weitergeleitet werden erfolgen. Eine mittelbare Übertragung kann beispielsweise dadurch erfolgen, dass das Konfigurationsdatenprotokollmodul die Konfigurationsdaten entweder selbst oder mittels eines weiteren Moduls in einer Datei ablegt, welche dann an den Aktualisierungs-Server weitergegeben wird. Die Kommunikationseinrichtung kann insbesondere auch eine Kommunikationseinrichtung sein, die zum Übertragen der Konfigurationsdaten an den Aktualisierungs-Server das Internet nutzt;
- wenigstens ein Nutzungserfassungsmodul zum Protokollieren von Nutzungsintensitätsdaten der Hard- und/oder Softwarekomponenten. Als Nutzungsintensitätsdaten können beispielsweise die Zahl der Aufrufe oder die Nutzungsdauer einer Hard- oder Softwarekomponente dienen. Die Nutzungsdauer kann insbesondere auch über mehrere Aufrufe aufaddiert werden. Es besteht daher die Möglichkeit, zum Bestimmen der Nutzungsintensität eine Kombination aus der Häufigkeit des Aufrufens und der jeweiligen Nutzungsdauer der entsprechenden Hard- oder Softwarekomponente zu verwenden;
- ein Nutzungsanalysemodul im Aktualisierungs-Server zum Auswerten der Nutzungsintensitätsdaten, wobei der Aktualisierungs-Server zum Bereitstellen der Aktualisierungs-Daten und/oder der Aktualisierungs-Informationen auf der Basis der Nutzungsintensitätsdaten ausgestaltet ist.

Das erfindungsgemäße Aktualisierungs-Management-System ermöglicht einerseits das Berücksichtigen der aktuellen Konfiguration der Soft- und Hardwareumgebung beim Bereitstellen der Aktualisierungs-Dateien und der Aktualisierungs-Informationen. Zudem ermöglicht das erfindungsgemäße Aktualisierungs-Management-System auch das Berücksichtigen des Nutzungsverhaltens des Anwenders der Soft- und Hardwareumgebung. So ist es beispielsweise möglich, dass eine Soft- und Hardwareumgebung zwar eine bestimmte Funktionalität mittels eines Softwaremoduls zur Verfügung stellt, die jedoch vom Anwender kaum oder gar nicht genutzt wird. In diesem Fall ist abzuwägen, ob ein Eingriff in ein laufendes System gerechtfertigt ist, um dieses Softwaremodul zu aktualisieren. Insbesondere wenn die Aktualisierung lediglich eine Leistungssteigerung der bestimmten Funktionalität und nicht das Beheben einer Unstimmigkeit betrifft, kann es gerechtfertigt sein, von einer Aktualisierung abzusehen.

Andererseits wird eine Aktualisierung häufig genutzter Software- oder Hardwarekomponenten in der Regel erwünscht sein, wenn diese eine Unstimmigkeit beseitigt oder zu einer Leistungssteigerung des Systems führt. Einen Anhaltspunkt für das Nutzungsverhalten des Anwenders der Software- und Hardwareumgebung lässt sich der Nutzungsintensität der einzelnen Komponenten unter Berücksichtigung der Konfiguration entnehmen. So kann es beispielsweise auch Komponenten geben, die selbst bei intensiver Nutzung nur selten aufgerufen werden. Hinweise darauf, welche Häufigkeit des Aufrufs bei einer intensiven Nutzung zu erwarten ist, lassen sich in der Regel den Konfigurationsdaten entnehmen.

Beim Analysieren der Nutzungsintensitätsdaten können verschiedenen Soft- oder Hardwarekomponenten vom Nutzungsanalysemodul unterschiedliche Prioritäten zugewiesen werden, sodass beispielsweise Unterschiede in der zu erwartenden Häufigkeit des Aufrufs bestimmter Module ausgeglichen werden können. So können etwa Module, die selbst bei intensiver Nutzung sehr selten aufgerufen werden, mit stärker gewichtet werden als solche Module, die häufig aufgerufen werden, selbst wenn sie nicht intensiv genutzt werden sollten. Eine Gewichtung kann hierbei beispielsweise anhand der Nutzungsdauer pro Aufruf erfolgen.

Vorzugsweise stellt das Nutzungsanalysemodul bei Aktualisierungsbedarf der Soft- und Hardwareumgebung im Rahmen der Aktualisierungs-Informationen wenigstens eine AktualisierungsOption und Informationen über die zu erwartenden Auswirkungen, beispielsweise auf Leistungsfähigkeit und Stabilität der Soft- und Hardwareumgebung, bereit. Anhand dieser Informationen kann ein Systemadministrator oder eine speziell darauf abgestimmte Software entscheiden, ob eine der welche Aktualisierungsoption realisiert werden soll.

Das erfindungsgemäße Verfahren zum Bereitstellen von Aktualisierungs-Dateien und/oder Aktualisierungs-Informationen für Soft- und/oder Hardwarekomponenten einer Hard- und Softwareumgebung umfasst die Schritte:
Protokollieren der Konfiguration der Soft- und/oder Hardwarekomponenten,
Analysieren der protokollierten Konfigurationsdaten im Hinblick auf Aktualisierungsbedarf der jeweiligen Soft- und/oder Hardwarekomponenten unter Berücksichtigung der verfügbaren Aktualisierungen und
Bereitstellen von Aktualisierungs-Dateien und/oder Aktualisierungs-Informationen auf der Basis der Ergebnisses der Analyse.

Im erfindungsgemäßen Verfahren werden zudem Nutzungsintensitätsdaten der Hard- und/oder Softwarekomponenten protokolliert. Die Nutzungsintensitätsdaten können dabei beispielsweise auch in die Konfigurationsdaten integriert werden. Zusätzlich zum Analysieren der protokollierten Konfigurationsdaten erfolgt dann ein Analysieren auch der Nutzungsintensitätsdaten. Das Bereitstellen der Aktualisierungs-Dateien und/oder der Aktualisierungs-Informationen erfolgt schließlich unter Berücksichtigung sowohl der protokollierten Konfigurationsdaten als auch der Nutzungsintensitätsdaten. Das erfindungsgemäße Verfahren kann insbesondere mit dem erfindungsgemäßen Aktualisierungs-Management-System durchgeführt werden. Spezielle Ausgestaltungen des Verfahrens ergeben sich aus den genannten Ausgestaltungen des Aktualisierungs-Management-Systems.

Das erfindungsgemäße Aktualisierungs-Management-System sowie das erfindungsgemäße Verfahren eignen sich insbesondere für Soft- und Hardwareumgebungen die häufig aktualisiert werden, beispielsweise Telekommunikationsanlagen, oder für Systeme, bei denen ein Patch ein wirtschaftliche Relevanz hat, beispielsweise bei Automatisierungssystemen für Kraftwerksanlagen. Außerdem eignen sie sich zur Anwendung bei Systemen, bei denen eine längere Ausfallzeit durch Fehler nicht akzeptabel ist. Auch für Systeme, bei denen der Nutzer/das Wartungspersonal keine detaillierte Kenntnis über die Auswirkung von Patches im benutzten System hat, kann die Erfindung zur Anwendung kommen.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

FIG 1 zeigt ein Blockschaltbild mit einer Prinzipdarstellung eines Automatisierungssystem und des erfindungsgemäßen Update-Management-Systems.

FIG 2 zeigt den in FIG 1 dargestellten Update-Server im Detail.

Nachfolgend wird ein erfindungsgemäßes Aktualisierungs-Management-System anhand der Aktualisierung eines Automatisierungssystems beschrieben. Das Automatisierungssystem 100, das beispielsweise zum Steuern eines Kraftwerkes eingesetzt werden kann, umfasst eine Anzahl Automatisierungskomponenten 102, 104, 106, die sowohl als Hardware- als auch als Softwarekomponenten ausgebildet sein können. Beispielsweise können die Komponenten für die Hardware oder die Firmware eines speicherprogrammierbaren Steuerungsmoduls stehen. Sie können jedoch auch für Softwarekomponenten stehen, die auf einem Standard-PC laufen. Mit anderen Worten die Automatisierungskomponenten 102, 104, 106 stellen alle aktualisierbaren Hard- und Softwarekomponenten des Automatisierungssystems dar und bilden in ihrer Gesamtheit eine Soft- und Hardwareumgebung.

Die Automatisierungskomponenten 102 bis 106 sind mit einem Bedien- und Überwachungscomputer 108 verbunden, auf dem Software zum Bedienen und Überwachen der Automatisierungskomponenten 102 bis 106 installiert ist. Der Bedien- und Überwachungscomputer 108 stellt selbst wiederum eine Automatisierungskomponente dar und ist damit ebenfalls Teil der Soft-und Hardwareumgebung.

Alle Automatisierungskomponenten 102 bis 108 sind aktualisierungsfähig, d.h. im Falle von Hardware kann ein Austausch von Bauteilen oder ein Aufrüsten, beispielsweise durch zusätzlichen Arbeitsspeicher, erfolgen. Im Falle von Software können Patches zur Fehlerbeseitigung oder neuere Programmversionen installiert werden.

Um die Aktualisierung durchzuführen, weist das Automatisierungssystem 100 ein Aktualisierungsmodul 110 auf, das im vorliegenden Ausführungsbeispiel als eigenständige Komponente dargestellt ist. Das Aktualisierungsmodul kann jedoch auch beispielsweise in den Bedien- und Überwachungscomputer 108 integriert sein oder dezentral ausgebildet sein, d.h. über die einzelnen Automatisierungskomponenten 102-108 verteilt sein. Das Aktualisierungsmodul 110 steht mit allen Automatisierungskomponenten, insbesondere mit dem Bedien- und Überwachungscomputer 108, in Verbindung und weist ein Protokollmodul 112 auf, welches sowohl die Konfiguration aller Komponenten im Automatisierungssystem als auch die Nutzungsintensität der Komponenten protokolliert. Obwohl das Protokollmodul 112 im vorliegenden Ausführungsbeispiel als eine Einheit ausgebildet ist, können auch getrennte Protokollmodule zum Protokollieren der Konfigurationsdaten und Nutzungsintensitätsdaten vorhanden sein.

Das Protokollieren der Konfigurationsdaten kann dabei das Erstellen einer Konfigurationsdatenhistorie umfassen, sodass außer der aktuellen Konfiguration auch die vorangehenden Konfigurationen und die vorgenommenen Änderungen protokolliert werden.

Das Protokollieren der Nutzungsintensität erfolgt im vorliegenden Ausführungsbeispiel anhand einer in das Protokollmodul 112 integrierten Zählsoftware, die für jede Automatisierungskomponente die Zahl der Aufrufe zählt.

Die Konfigurationsdaten und die Nutzungsintensitätsdaten werden an ein Standardisierungsmodul 114 weitergegeben, welches die Daten in ein standardisiertes Format bringt.

Nachdem die Konfigurationsdaten und die Nutzungsintensitätsdaten in das standardisierte Format gebracht worden sind, werden sie mittels eines Kommunikationsmoduls 116 über eine sichere Internetverbindung 120 an einen Aktualisierungs-Server 130 ausgegeben, der anhand der Konfigurations- und der Nutzungsintensitätsdaten wenigstens eine Aktualisierungsoption auswählt, sofern er Aktualisierungsbedarf des Automatisierungssystems 100 feststellt.

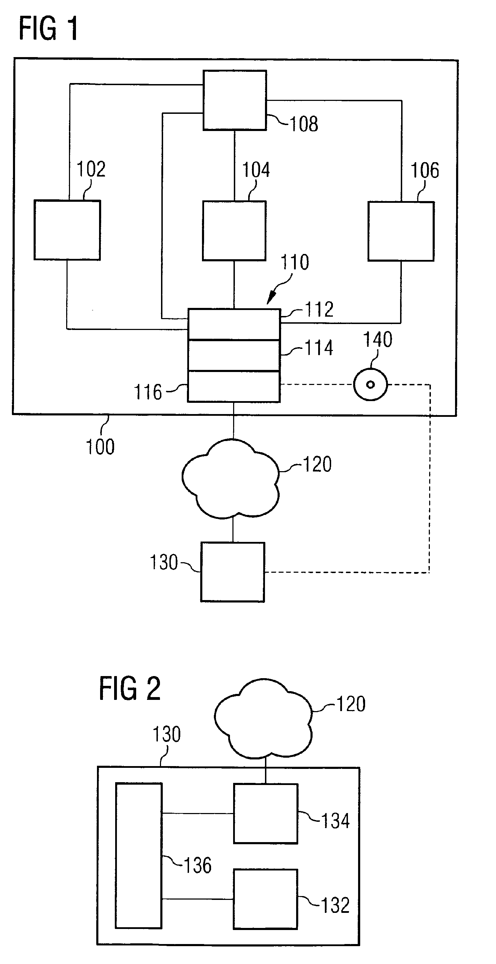

Der Aktualisierungs-Server 130 ist in Figur 2 im Detail dargestellt. Der Aktualisierungs-Server 130 umfasst eine Update-datenbank 132, in dem alle für die Hard- und Softwarekomponenten des Automatisierungssystems aktuell verfügbaren Updates abgelegt sind. Weiterhin umfasst der Aktualisierungs-Server ein Kommunikationsmodul 134, mit dem er über das Internet 120 mit dem Kommunikationsmodul 116 des Automatisierungssystems 100 kommunizieren kann. Das Kommunikationsmodul 134 ist mit einem Analysemodul 136 verbunden, welches wiederum mit der Update-Datenbank 132 in Verbindung steht.

Der Update-Server 132 empfängt über das Internet 120 die Konfigurationsdaten und die Nutzungsintensitätsdaten des Automatisierungssystems 100. Vom Kommunikationsmodul 134 werden diese Daten an das Analysemodul 136 weitergegeben. Im Analysemodul 136 erfolgt eine Analyse der Konfiguration des Automatisierungssystems auf Aktualisierungsbedarf. Dabei werden die Konfigurationsdaten mit den in der Update-Datenbank vorhandenen Updates abgeglichen, beispielsweise indem Programmversionsnummern miteinander verglichen werden. Das Ergebnis der Analyse ist eine Liste mit vorhandenen Updates, die auf dem Automatisierungssystem durchgeführt werden können.

Weiterhin führt das Analysemodul 136 eine Analyse der Nutzungsintensität der einzelnen Automatisierungskomponenten 102 bis 108 durch. Die Analyse kann auf der Basis der Zahl der Aufrufe der einzelnen Komponenten erfolgen. Wenn das Analysemodul beispielsweise feststellt, dass eine Automatisierungskomponente intensiv genutzt wird, was sich beispielsweise durch häufiges Aufrufen ausdrücken kann, so wird diese Komponente beim Zusammenstellen einer Aktualisierungsoption stärker berücksichtigt, als eine Automatisierungskomponente die nur wenig intensiv genutzt wird, beispielsweise selten aufgerufen wird.

Das Analysieren der Nutzungsintensität kann jedoch auch auf der Basis der Nutzungsdauer erfolgen. In diesem Fall protokolliert das Protokollmodul 112 nicht die Anzahl der Aufrufe sondern die Nutzungsdauer der einzelnen Automatisierungskomponenten. Es ist jedoch auch möglich, beide Informationen zu kombinieren und beispielsweise die Nutzungsdauer pro Aufruf zur Grundlage der Analyse der Nutzungsintensität zu machen. In diesem Fall protokolliert das Protokollmodul 112 sowohl die Zahl der Aufrufe als auch die jeweilige Nutzungsdauer.

Das Zusammenstellen einer Aktualisierungsoption kann dann beispielsweise derart erfolgen, dass vorhandene Updates für die Automatisierungskomponenten nur dann Berücksichtigung finden, wenn eine bestimmte Schwelle der Nutzungsintensität, beispielsweise eine bestimmte Zahl der Aufrufe oder eine bestimmte Nutzungsdauer oder eine bestimmte Nutzungsdauer pro Aufruf überschritten wird. Dabei können einzelne Automatisierungskomponenten auch unterschiedlich gewichtet werden. So ist es beispielsweise möglich, für Automatisierungskomponenten, die für den fehlerfreien Betrieb oder die Leistungsfähigkeit des Automatisierungssystems von besonderer Bedeutung sind, niedrigere Schwellen vorzusehen, als für die übrigen Automatisierungskomponenten.

Anhand des Analyseergebnisses stellt das Analysemodul 136 schließlich eine Aktualisierungsoption auf, welche ein Update-Paket und eine Informationsdatei umfasst. Im Aktualisierungspaket befinden sich in der Regel nicht alle für das Automatisierungssystem verfügbaren Updates, sondern nur solche, die zum Aktualisieren von Automatisierungskomponenten benötigt werden, für die einerseits Aktualisierungsbedarf anhand der Konfigurationsdaten festgestellt worden ist und andererseits die Nutzungsintensität hoch genug ist, um eine Aktualisierung zu rechtfertigen. Die Informationsdatei enthält Informationen zu den einzelnen Updates und insbesondere auch Informationen darüber, welche Funktionen des Automatisierungssystems durch die Updates in welcher Weise beeinflusst werden.

Das Aktualisierungspaket wird schließlich über das Kommunikationsmodul 134 und das Internet 120 an das Kommunikationsmodul 116 des Automatisierungssystems 100 ausgegeben. Von dort wird das Aktualisierungspaket an den Bedien- und Überwachungscomputer 108 weitergegeben, wo es dem Bedien- und Überwachungspersonal zur Verfügung steht. Anhand der in der Informationsdatei enthaltenen Informationen kann das Bedienpersonal dann entscheiden, ob die Aktualisierungen wie vorgeschlagen durchgeführt werden sollen. In diesem Fall kann das Update-Paket auch alle verfügbaren Updates beinhalten, wobei sich ihre jeweilige Relevanz der Informationsdatei entnehmen lässt. Die Entscheidung über die Installation trifft dann der Administrator. Je nach kundenspezifischem Interesse ist es jedoch auch möglich, eine automatische Aktualisierung durchzuführen, ohne dass dem Administrator vorab das Update-Paket zur Auswahl von Update-Optionen zugeht. In diesem Fall genügt es, wenn alleine die Informationsdatei an den Bedien- und Überwachungscomputer 108 weitergegeben wird, um das Bedienpersonal über die vorgenommene Aktualisierung und ihre Auswirkung auf das Automatisierungssystem zu informieren.

Im beschriebenen Update-Server wurde die Analyse der Konfigurationsdaten und die Analyse der Nutzungsintensitätsdaten vom selben Nutzungsanalysemodul vorgenommen. Es ist jedoch auch möglich, für das Analysieren der Konfigurationsdaten und der Nutzungsintensitätsdaten getrennte Module vorzusehen.

Schließlich sei noch darauf hingewiesen, dass der Aktualisierungsserver 130 nicht notwendigerweise über das Internet 120 mit dem Automatisierungssystem 100 in Verbindung stehen muss. Er kann ebensogut über ein gesondertes Netzwerk mit dem Automatisierungssystem 100 in Verbindung stehen. Dies bietet sich insbesondere dort an, wo der Zugriff durch unberechtigte besonders zuverlässig vermieden werden muss. Schließlich ist es auch möglich, die Konfigurationsdaten und die Nutzungsintensitätsdaten auf einem Datenträger 140 zu speichern, welcher von einem entsprechenden Lesegerät des Update-Servers gelesen werden kann. Auch das Übertragen des Aktualisierungspaketes kann mittels eines Datenträgers 140 erfolgen.

Es sei and dieser Stelle auch darauf hingewiesen, dass die Aktualisierung nicht nur die Software zu umfassen braucht. So kann beispielsweise der Informationsdatei ein Abschnitt Hardwareaktualisierung beigefügt sein, in welchem Änderungen an der Hardwarekonfiguration vorgeschlagen werden. Diese können beispielsweise Vorschläge wie "ein schnellerer Bediencomputer würde die Leistungsfähigkeit des Systems erhöhen" oder "der Computer XY benötigt mehr Arbeitsspeicher, um eine aktualisierte Version des Programms Z ohne Leistungseinbußen verwenden zu können", beinhalten.

## Patentansprüche

1. Aktualisierungs-Management-System zum Managen der Aktualisierung von Soft- und/oder Hardwarewarekomponenten (102-108) einer Hard- und Softwareumgebung 100 mit:
- wenigstens einem Konfigurationsdatenprotokollmodul (112) zum Protokollieren von Konfigurationsdaten der Soft-und/oder Hardwarewarekomponenten (102-108),
- einem zum Bereitstellen von Aktualisierungs-Dateien und/oder Aktualisierungs-Informationen ausgestalteten Aktualisierungs-Server (130) mit einem Konfigurationsanalysemodul (136) zum Analysieren der protokollierten Konfigurationsdaten im Hinblick auf Aktualisierungsbedarf der jeweiligen Soft- und/oder Hardwarewarekomponenten (102-108) unter Berücksichtigung der verfügbaren Aktualisierungen, und
- einer Kommunikationsseinrichtung (116, 134) zum Übertragen der Konfigurationsdaten vom Konfigurationsdatenprotokollmodul (112) an den Aktualisierungs-Server (130),
**dadurch gekennzeichnet,**
- **dass** wenigstens ein Nutzungserfassungsmodul (112) zum Protokollieren von Nutzungsintensitätsdaten der Hard- und/oder Softwarekomponenten (102-108) vorhanden ist,
- **dass** die Kommunikationsseinrichtung (116, 134) zum Übertragen der Nutzungsintensitätsdaten vom Nutzungserfassungsmodul (112) an den Aktualisierungs-Server (130) ausgebildet ist und
- **dass** der Aktualisierungs-Server (130) ein Nutzungsanalysemodul (136) zum Auswerten der Nutzungsintensitätsdaten umfasst und zum Bereitstellen der Aktualisierungs-Dateien und/oder der Aktualisierungs-Informationen auf der Basis der Nutzungsintensitätsdaten ausgestaltet ist.

2. Aktualisierungs-Management-System nach Anspruch 1, **dadurch gekennzeichnet, dass** als Nutzungserfassungsmodul (112) zum Protokollieren der Nutzungsintensität ein Zähler zum Protokollieren der Zahl der Aufrufe wenigstens einer bestimmten Soft- oder Hardwarekomponente (102-108)vorhanden ist.

3. Aktualisierungs-Management-System nach Anspruch 1 oder 2, **dadurch gekennzeichnet, dass** als Nutzungserfassungsmodul (112) zum Protokollieren der Nutzungsintensitätsdaten eine Zeiterfassungseinheit zum Protokollieren der Nutzungsdauer wenigstens einer bestimmten Soft- oder Hardwarekomponente (102-108) vorhanden ist.

4. Aktualisierungs-Management-System nach einem der vorangehenden Ansprüche, **dadurch gekennzeichnet, dass** das Nutzungsanalysemodul (136) derart ausgestaltet ist, dass verschiedenen Soft- oder Hardwarekomponenten (102-108) beim Analysieren der Nutzungsintensitätsdaten unterschiedliche Prioritäten zugewiesen werden können.

5. Aktualisierungs-Management-System nach einem der vorangehenden Ansprüche, **dadurch gekennzeichnet, dass** das Nutzungsanalysemodul (136) derart ausgestaltet ist, dass es bei Aktualisierungsbedarf der Soft- und Hardwareumgebung (100) wenigstens eine Aktualisierungsoption und ihre Auswirkungen auf die Soft- und Hardwareumgebung (100)ermittelt und im Rahmen der Aktualisierungs-Informationen bereitstellt.

6. Verfahren zum Bereitstellen von Aktualisierungs-Dateien und/oder Aktualisierungs-Informationen für Soft- und/oder Hardwarewarekomponenten (102-108) einer Hard- und Softwareumgebung (100) mit den Schritten:
- Protokollieren der Konfiguration der Soft- und/oder Hardwarewarekomponenten (102-108),
- Analysieren der protokollierten Konfigurationsdaten im Hinblick auf Aktualisierungsbedarf der jeweiligen Soft-und/oder Hardwarewarekomponenten (102-108) unter Berücksichtigung der verfügbaren Aktualisierungen,
- Bereitstellen von Aktualisierungs-Dateien und/oder Aktualisierungs-Informationen auf der Basis des Ergebnisses der Analyse,
**dadurch gekennzeichnet, dass**
- zusätzlich Nutzungsintensitätsdaten der Hard- und/oder Softwarekomponenten (102-108) protokolliert werden,
- zusätzlich zum Analysieren der protokollierten Konfigurationsdaten ein Analysieren der Nutzungsintensitätsdaten erfolgt und
- das Bereitstellen der Aktualisierungs-Dateien und/oder der Aktualisierungs-Informationen unter Berücksichtigung der Konfigurationsdaten und der Nutzungsintensitätsdaten erfolgt.

7. Verfahren nach Anspruch 6,
**dadurch gekennzeichnet, dass** das Protokollieren der Nutzungsintensität ein Zählen der Aufrufe wenigstens einer bestimmten Soft- oder Hardwarekomponente (102-108) umfasst.

8. Verfahren nach Anspruch 6 oder 7,
**dadurch gekennzeichnet, dass** das Protokollieren der Nutzungsintensität ein Erfassen der Nutzungsdauer wenigstens einer bestimmten Soft- oder Hardwarekomponente 102-108) umfasst.

9. Verfahren nach einem der Ansprüche 6 bis 8,
**dadurch gekennzeichnet, dass** beim Analysieren der Nutzungsintensitätsdaten verschiedenen Soft- oder Hardwarekomponenten 102-108) unterschiedliche Prioritäten zugewiesen werden können.

10. Verfahren nach einem der Ansprüche 6 bis 9,
**dadurch gekennzeichnet, dass** bei Aktualisierungsbedarf der Soft- und Hardwareumgebung (100) wenigstens eine Aktualisierungsoption und ihre Auswirkungen auf die Soft- und Hardwareumgebung (100) ermittelt und im Rahmen der Aktualisierungs-Informationen bereitgestellt wird.
